## Europäisches Patentamt
## European Patent Office
## Office européen des brevets

(11) Publication number: **0 083 234**
**B1**

(12) **EUROPEAN PATENT SPECIFICATION**

(45) Date of publication of patent specification: **08.07.87**

(51) Int. Cl.⁴: **B 60 G 3/20**, B 60 G 3/26, B 60 G 15/06

(21) Application number: **82306953.9**

(22) Date of filing: **24.12.82**

(54) Independent rear wheel suspension.

(30) Priority: **24.12.81 US 334334**

(43) Date of publication of application:
**06.07.83 Bulletin 83/27**

(45) Publication of the grant of the patent:
**08.07.87 Bulletin 87/28**

(84) Designated Contracting States:
**DE FR GB**

(56) References cited:
**DE-A-3 012 873**
**DE-B-2 027 885**
**US-A-4 245 853**

(73) Proprietor: **FORD MOTOR COMPANY LIMITED**
**Eagle Way**
**Brentwood Essex CM13 3BW (GB)**
(84) **GB**

(73) Proprietor: **FORD-WERKE**
**AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **Rumpel, Manfred**
**4494 Chamberlain Drive**
**Birmingham Michigan (US)**

(74) Representative: **Messulam, Alec Moses et al**
**A. Messulam & Co. 24 Broadway**
**Leigh on Sea Essex SS9 1BN (GB)**

The file contains technical information
submitted after the application was filed and
not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates generally to independent wheel suspension systems for motor vehicles and more particularly to a strut type independent rear suspension for a front wheel drive vehicle.

Rear suspension systems have been constructed to control the attitude of the rear wheels in order to provide particular handling characteristics of the motor vehicle, for example roll understeer, roll oversteer, or roll neutral steer, as well as to provide a soft ride free from road vibrations. Handling characteristics such as roll understeer, roll oversteer, or roll neutral steer during cornering of a motor vehicle are achieved by controlling the toe angle of one of the rear wheels during the jounce stroke of the suspension.

Reference is made to the rear wheel suspension of the vehicle 'Lancia Beta'.

A vibration free ride is enhanced if the rear wheels are allowed to recess when the wheel hits a bump. However, both wheel recession and steering stability must be taken into account when designing a rear suspension. One way to take both factors into account is by controlling the toe angle of the wheel during its recession.

One way to control the toe angle of a wheel is with a suspension having two control arms substantially transverse to the longitudinal axis of the vehicle. The arms control the toe-in of the wheel as they shift positions. However, previous usage of the two transverse control arms in combination with a strut suspension necessitated the spring element in the strut suspension to be mounted about the strut. In many strut suspensions, the spring has been positioned away from the strut and interposed between a transverse control arm and the chassis so that the strut upper mount can be constructed from softer rubber, and so that cargo space or engine compartment space can be maximized.

In accordance with the present invention, there is provided an independent rear wheel suspension for a vehicle comprising a chassis, a wheel support member a front control arm and a rear control arm each of said control arms extending transversely with respect to the longitudinal axis of the vehicle and each pivotably connected at its inboard end to said chassis and at its outboard end to said wheel support member, characterised by a spring seat (30) integrally formed with one of said front and rear control arms (20), said spring seat (30) seating a spring (31) interposed between said spring seat (30) and said chassis (10), and said arms (20, 22) being connected together at a position between said inboard ends and said outboard ends by a connection means (78) constructed to transfer spring loads from said one arm to said other arm and to allow relative horizontal displacement of said arms.

It is desirable that the connection between the front control arm and rear control arm include a rubber bushing that resiliently flexes under side loads exerted thereon.

According to a second aspect of the invention, there is provided an independent rear wheel suspension for vehicle comprising a chassis (10), a wheel support member (28), and a front control arm (20) and a rear control arm (22), each of said control arms (20, 22) extending transversely with respect to the longitudinal axis of the vehicle and each pivotably connected at its inboard end to said chassis (10) and at its outboard end to said wheel support member, characterised by a spring seat (30) integrally formed with one of said front and rear control arms (20), said spring seat (30) seating a spring (31) interposed between said spring seat (30) and said chassis (10), one of said control arms (20) being connected to said other of said control arms (23) through a resilient bushing (28) at a position between their inboard ends and outboard ends, and said resilient bushing (78) being constructed to resiliently resist recessive movement of said transverse arms (20, 22) when said arms pivot in a rearward direction about their respective inboard ends.

A suspension according to the present invention provides for increased cargo or engine space. Secondly, it allows the use of softer rubber in the strut upper mount. Furthermore, it provides the above features in a suspension that can provide roll understeer, roll oversteer or roll neutral steer, as well as wheel recession.

The invention will now be described further, by way of example with reference to the accompanying drawings, in which:

Figure 1 is a rear elevational view, partly in section, of a motor vehicle incorporating independent rear wheel suspensions for its left and right rear wheels according to the invention.

Figure 2 is a plan view of the left rear wheel suspension shown in Figure 1,

Figure 3 is a cross-sectional view taken along the line III—III shown in Figure 2,

Figure 4 is a view similar to Figure 2 showing the suspension during wheel recession,

Figure 5 is a plan view similar to Figure 2 showing a second embodiment of a rear wheel suspension,

Figure 6 is a plan view similar to Figure 5 showing the second embodiment during wheel recession,

Figure 7 is a cross-sectional view taken along the line VII—VII in Figure 5, and

Figure 8 is a cross-sectional view taken along the line VIII—VIII in Figure 6.

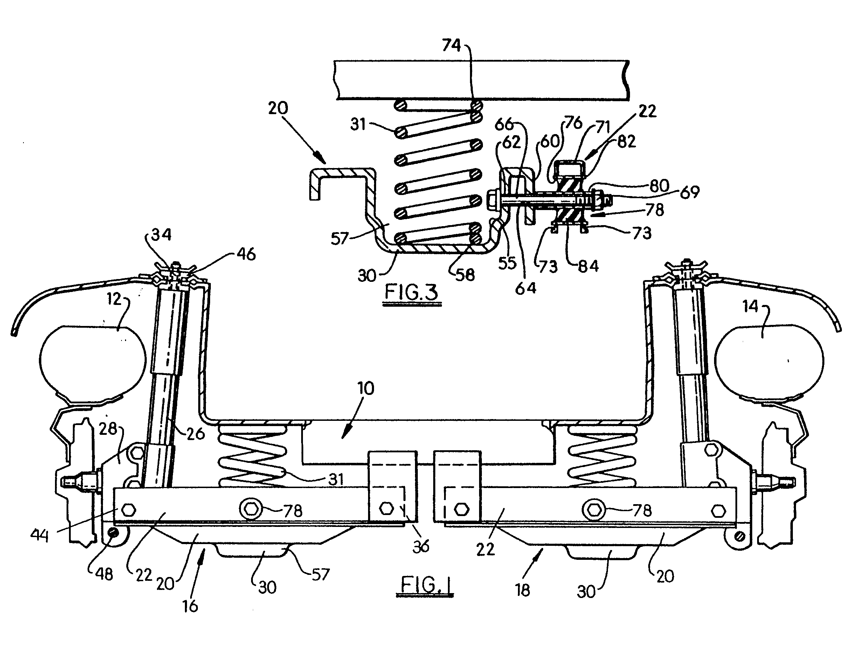

Referring now to Figure 1, a motor vehicle chassis (or unitized body and chassis) 10 is supported on left and right road wheels 12 and 14 by novel left and right independent wheel suspensions 16 and 18. Each wheel suspension 16 and 18 is identical except that one is a mirror image of the other; i.e., one is for the left side rather than for the right side. Since each independent suspension is the same, reference will only be made to the left wheel suspension 16.

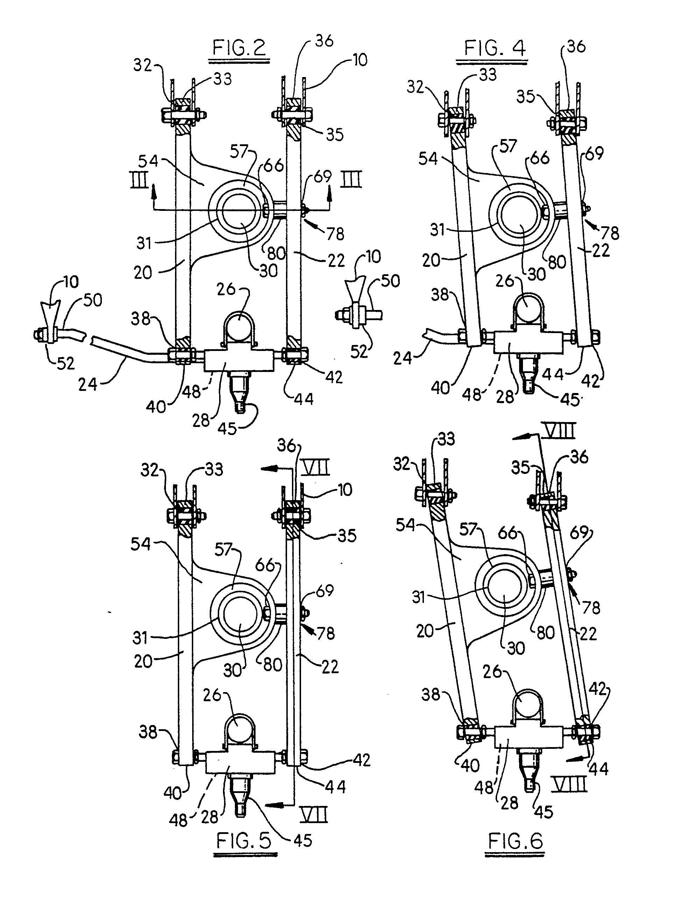

Generally, as shown in Figures 1 and 2, the wheel suspension 16 includes a front transverse control arm 20, a rear transverse control arm 22, trailing arm 24, and a telescopic strut 26 which connects a wheel support member 28 to the motor vehicle chassis 10. Means are provided to connect the inner ends of the arms 20, 22 to the chassis 10 and their outer ends to the wheel support member 28, as will be described. A spring seat 30 is integrally formed in control arm 20 and seats a coil spring 31 interposed between the seat 30 and chassis 10. The control arm 20 is pivotably connected to control arm 22 at a mid-portion thereof through a pivotable connection 29.

The front arm 20 has an elastomeric bushing 32 at its inboard end 33 which pivotably connects the arm 20 to the chassis 10. Similarly, the rear arm 22 has a similar bushing 35 at its inboard end 36 which pivotably connects the arm 22 to the chassis 10. An elastomeric bushing 38 pivotably connects the outboard end 40 of the front control arm 20 to the wheel support member 28. Similarly, a resilient bushing 42 pivotably connects outboard end 44 of the rear control arm 22 to the wheel support member 28.

The wheel support member 28 has an integral wheel spindle 45 which rotatably mounts wheel 12. The spindle 45 is positioned longitudinally between the bushings 40 and 42. The wheel support member 28 is rigidly connected to the telescopic shock absorbing strut 26. The upper end 34 of the strut 26 is pivotably connected through a resilient upper mount 46 to the chassis 10.

The longitudinal trailing arm 24 is connected through an elastomeric bushing 48 to the wheel support member 28 and extends substantially forward therefrom. The arm 24 has its front end 50 resiliently connected through bushing 52 to the chassis 10.

As shown clearly in Figure 3, the spring seat 30 is integrally formed with the front control arm 20 at a mid-position between the inboard end 33 and outboard end 40 of the arm 20. The spring seat is recessed from the central area 54 and connected thereto by a downwardly extending wall section 55. In general, the recessed seat 30 forms a pocket 57 which receives the lower end 58 coil spring 31.

The front arm 20 has a vertically extending outer wall 60. As shown in Figure 3, the vertical wall 60 and wall section 55 have apertures 62 and 64 therethrough which receive a bolt 66.

The rear control arm 22 has a U-shaped cross-section with a top wall 71 and two depending side walls 73. The two side walls 73 have apertures 76 to receive an elastomeric bushing 78. The bushing 78 connects front arm 20 to rear arm 22 via bolt 66.

The bushing 78 includes an inner sleeve 80 which receives the bolt 66, and an outer sleeve 82 that fits within apertures 76 and an elastomeric layer 84 bonded therebetween. The inner sleeve 80 has sufficient length to abut wall 60 of the front arm to properly position bushing 78 in the arm 22. The sleeve 80 is retained in place by nut 69 threaded onto bolt 66.

The top end 74 of coil spring 31 is seated against the chassis 10 so that the coil spring 31 normally exerts a downwardly biasing force on the spring seat 30 and both control arms 20 and 22 when the vehicle is at rest.

When the control arms 20 and 22 undergo jounce movement, the arms 20 and 22 pivot upwardly about the inboard bushings 32 and 35. As the arms 20 and 22 pivot upwardly, the spring seat 30 is moved upward with the arm 20 to compress the coil spring 31.

Similarly, when the control arms 20 and 22 undergo rebound movement and pivot downwardly about inboard bushings 32 and 35, the spring seat 30 moves downwardly and allows coil spring 31 to elongate.

Arms 20 and 22 and the other suspension components may be arranged to provide an increase in toe-in during jounce of the wheel 12. Alternatively, no toe change or toe-out may be provided during jounce of wheel 12. One skilled in the art can provide the appropriate geometry of the various suspension arms that will provide the desired toe angle changes during jounce.

By providing a plurality of resilient bushings in the suspension system, the road wheel may recess when subjected to a longitudinal force such as occurs when the wheel strikes a road obstacle (e.g., a tar strip in concrete pavement). A shown in Figure 4, the control arms 20 and 22 control the toe angle of the rear wheel 12 during recession of the wheel. Arms 20 and 22 and the other suspension components may be arranged to provide no toe change during recession of the wheel. Alternatively, the arms 20 and 22 may be arranged to provide toe-in as the wheel undergoes recession. The trailing arm 24 controls the amount of recession due to its resilient bushings 48 and 52. The amount of desired recession may be determined by the appropriate choice of elastomeric material used in bushings 48 and 50. The softer the material is, the more recession is allowed. The elastomeric bushing 78 that connects the arm 20 to the arm 22 is resilient to allow the control arm 20 to move with respect to the control arms 22 as both arms 20 and 22 pivot about vertical axes when the rear wheel 12 undergoes recession. When the wheel 12 regains its normal position, as shown in Figure 2, the arms 20 and 22 pivot back to their initial position.

As also shown in the figures, the position of the spring near the control arms rather than about strut 26 provides for increased cargo or engine space since the clearance about strut 26 can be minimized. Furthermore, by positioning the spring on arm 20, softer rubber can be used in upper mount 46 than would otherwise be feasible. The spring is positioned on arm 20 without losing any quality in ride. The force of spring 31 is directed to both arms 20 and 22 in equal amounts. The arms 20 and 22, by being connected to the wheel support member 28 on opposite sides of the spindle 45, produces virtually no torque on the wheel support member. The even distribution of the spring force on the wheel support member promotes a vibration free ride.

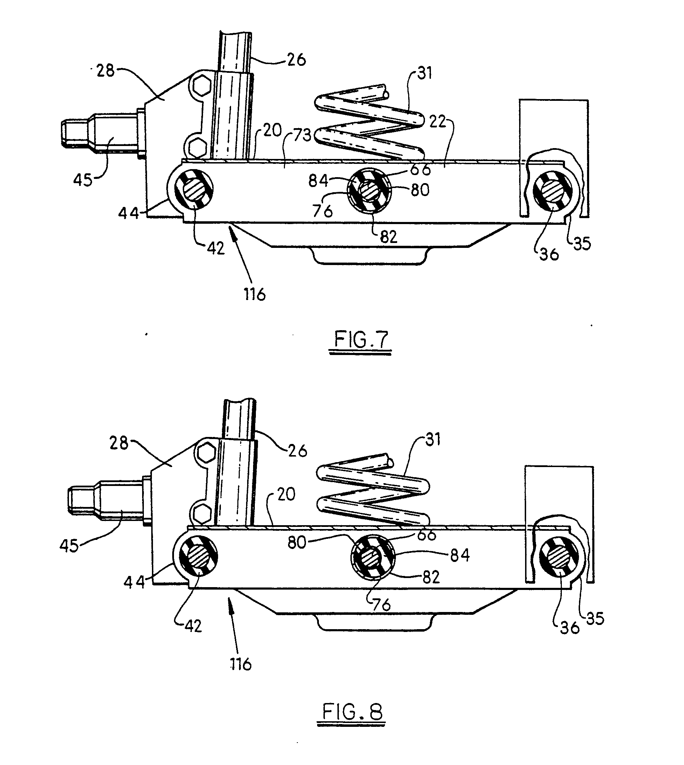

Reference now will be made to Figures 5—8 which disclose a second embodiment. To simplify the discussion, parts that are identical to parts described in the first embodiment are referred to with the same numeral. As shown, the suspension 116 is identical to the first embodiment except that there is no trailing arm. The two arms 20 and 22 control wheel recession through the bushing 78. The elastomeric layer of material 84 has sufficient high shear and compression rates to control wheel recession. When the two arms 20 and 22 are in a free rolling position as shown in Figure 5, the bolt 66 and inner sleeve 80 are centered within outer sleeve 82 of bushing 78 as shown in Figure 7.

Forces that cause wheel recession and cause arms 20 and 22 to recess as shown in Figure 6 are counteracted by the bushing. Wheel recession forces the bolt 66 and inner sleeve 80 to move from their equilibrium position shown in Figure 7 to a position shown in Figure 8. When the bushing 78 is distorted as shown in Figure 8, the elastomeric bushing provides a counteracting force for controlling recession of the wheel. The more off-centered bolt 66 becomes with respect to the bushing 78, the higher the counteracting force becomes. When the wheel recession ceases and the suspension returns to its positions as shown in Figure 6, the resilient bushing 78 returns to its position in Figure 7.

Not only does the bushing 78 function to transfer some of the spring load from arm 20 to arm 22, but also functions as a control against wheel recession.

In this fashion, the suspension as described provides for increased cargo or engine space, allows softer rubber to be used in the strut upper mount, and can be constructed to provide roll understeer, roll oversteer, or roll neutral steer, as well as wheel recession. In addition, wheel recession can be controlled in an efficient manner with a minimum number of parts.

**Claims**

1. An independent rear wheel suspension for a vehicle comprising a chassis, a wheel support member a front control arm (20) and a rear control arm (22) each of said control arms extending tranversely with respect to the longitudinal axis of the vehicle and each pivotably connected at its inboard end to said chassis and at its outboard end to said wheel support member, characterised by a spring seat (30) integrally formed with one of said front and rear control arms (20), said spring seat (30) seating a spring (31) interposed between said spring seat (30) and said chassis (10), and said arms (20, 22) being connected together at a position between said inboard ends and said outboard ends by a connection means (78) constructed to transfer spring loads from said one arm to said other arm and to allow relative horizontal displacement of said arms.

2. An independent rear wheel suspension as claimed in Claim 1, further comprising an upwardly extending telescopic shock absorber (26) having its lower end rigidly secured to said wheel support member (28), and means pivotably connecting the upper end (34) of said shock absorber to said chassis (10).

3. An independent rear wheel suspension as claimed in Claim 1 or 2, wherein said connection means (78), comprises a resilient means (84) for resiliently resisting relative horizontal displacement of said arms.

4. An independent rear wheel suspension as claimed in Claim 3, wherein said connection means (78) comprises an elastomeric bushing (84) that resiliently resists relative horizontal displacements of said spring seat and said other arm.

5. An independent rear wheel suspension as claimed in any preceding claim, wherein said wheel support member (28) is constructed to support said wheel (12) in a position longitudinally between where the outboard ends of said arms (20, 22) are connected to said wheel support member (28).

6. An independent rear wheel suspension as claimed in any preceding claim, further comprising a longitudinal link (24) having one end (50) connected to said chassis (10) and its other end connected to said wheel support member (28).

7. An independent rear wheel suspension as claimed in any preceding claim, wherein the spring seat (30) is integrally formed with the front control arm (20).

8. An independent rear wheel suspension as defined in Claim 7, wherein said spring seat (30) is recessed downwardly within said front arm (20) to form a pocket and said spring means (31) comprises a coil spring sized to fit within said pocket.

9. An independent rear wheel suspension for vehicle comprising a chassis (10), a wheel support member (28), and a front control arm (20) and a rear control arm (22), each of said control arms (20, 22) extending transversely with respect to the longitudinal axis of the vehicle and each pivotably connected at its inboard end to said chassis (10) and at its outboard end to said wheel support member, characterised by a spring seat (30) integrally formed with one of said front and rear control arms (20), said spring seat (30) seating a spring (31) interposed between said spring seat (30) and said chassis (10), one of said control arms (20) being connected to said other of said control arms (23) through a resilient bushing (28) at a position between their inboard ends and outboard ends, and said resilient bushing (78) being constructed to resiliently resist recessive movement of said transverse arms (20, 22) when said arms pivot in a rearward direction about their respective inboard ends.

10. An independent rear wheel suspension as claimed in Claim 9, wherein said bushing (78) comprises an inner sleeve (80) extending axially toward one of said arms, a coaxial outer sleeve (82), an elastomeric material coaxially positioned between said sleeves and bonded thereto, abutting means (60) on one of said arms (20) for abutting said inner sleeve (80), and means (66) for securing said inner sleeve (80) to said one arm (20); said outer sleeve (82) being fitted in an aperture in the other of said arms (22) such that recessive movement of both arms cause said inner sleeve (80) to translationally move with respect to said outer sleeve (82) and displace said elastomeric material (84) which produces a counteracting force in response to any force which causes said recessive movement.

**Patentansprüche**

1. Eine unabhängige Hinterradaufhängung für ein Fahrzeug, umfassend ein Fahrgestell, eine Radhalterung, einen vorderen Lenkerarm (20), einen hinteren Lenkerarm (22), wobei jeder der genannten Lenkerarme quer zur Längsachse des Fahrzeugs verläuft und jeder an seinem inneren Ende mit dem genannten Fahrgestell und an seinem äußeren Ende mit der genannten Radhalterung drehbar verbunden ist, gekennzeichnet, durch einen Federsitz (30), der aus einem Stück mit einem der genannten vorderen und hinteren Lenkerarme (20) gestaltet ist, wobei der gennante Federsitz (30) eine zwischen dem genannten Federsitz (30) und dem genannten Fahrgestell (10) eingesetzte Feder (31) aufnimmt, und wobei die genannten Arme (20, 22) an einer Stelle zwischen den genannten inneren Enden und den genannten äußeren Enden durch eine Verbindungsvorrichtung (78) verbunden sind, die so ausgeführt ist, daß Federlasten vom genannten einen Arm auf den genannten anderen Arm übertragen werden und eine relative horizontale Verschiebung der gennanten Arme ermöglicht wird.

2. Eine unabhängige Hinterradaufhängung gemäß Anspruch 1, weiterhin umfassend einen sich nach oben erstreckenden, teleskopischen Stoßdämpfer (26), dessen unteres Ende starr an der genannten Radhalterung (28) befestigt ist, und Vorrichtungen, die das obere Ende (34) des genannten Stoßdämpfers mit dem genannten Fahrgestell (10) drehbar verbinden.

3. Eine unabhängige Hinterradaufhängung gemäß Anspruch 1 oder 2, wobei die genannte Verbindungsvorrichtung (78) eine federnde Vorrichtung (84) umfaßt, um der relativen horizontalen Verschiebung der genannten Arme federnd Widerstand entgegenzusetzen.

4. Eine unabhängige Hinterradaufhängung gemäß Anspruch 3, wobei die genannte Verbindungsvorrichtung (78) eine elastomere Buchse (84) umfaßt, die den relativen horizontalen Verschiebungen des genannten Federsitzes und des genannten anderen Arms federnd Widerstand entgegensetzt.

5. Eine unabhängige Hinterradaufhängung gemäß irgendeinem der vorstehenden Ansprüche, wobei die genannte Radhalterung (28) so ausgeführt ist, daß sie das genannte Rad (12) in Längsrichtung in einer Lage zwischen den Punkten hält, an welchen die äußeren Enden der genannten Arme (20, 22) mit der genannten Radhalterung (28) verbunden sind.

6. Eine unabhängige Radaufhängung gemäß irgendeinem der vorstehenden Ansprüche, weiterhin umfassend ein Längsglied (24), bei dem ein Ende (50) mit dem genannten Fahrgestell (10) verbunden und sein anderes Ende mit der genannten Radhalterung (28) verbunden ist.

7. Eine unabhängige Hinterradaufhängung gemäß irgendeinem der vorstehenden Ansprüche, wobei der Federsitz (30) aus einem Stück mit dem vorderen Lenkerarm (20) gestaltet ist.

8. Eine unabhängige Hinterradaufhängung gemäß Anspruch 7, wobei der genannte Federsitz (30) nach unten innerhalb des genannten vorderen Arms (20) eine Vertiefung besitzt, so daß eine Kammer gebildet wird, und die genannte Federvorrichtung (31) eine Spiralfeder umfaßt, die so bemessen ist, daß sie in die genannte Kammer paßt.

9. Eine unabhängige Hinterradaufhängung für ein Fahrzeug, umfassend ein Fahrgestell (10), eine Radhalterung (28) und einen vorderen Lenkerarm (20) und einen hinteren Lenkerarm (22), wobei jeder der genannten Lenkerarme (20, 22) quer zur Längsachse des Fahrzeugs verläuft und jeder an seinem inneren Ende mit dem genannten Chassis (10) und an seinem äußeren Ende mit der genannten Radhalterung drehbar verbunden ist, gekennzeichnet durch einen Federsitz (30), der aus einem Stück mit einem der genannten vorderen und hinteren Lenkerarme (20) gestaltet ist, wobei der genannte Federsitz (30) eine zwischen dem genannten Federsitz (30) und dem genannten Fahrgestell (10) eingesetzte Feder (31) aufnimmt, wobei einer der genannten Lenkerarme (20) mit dem genannten anderen der genannten Lenkerarme (23) über eine federnde Buchse (28) an einer Stelle zwischen ihren inneren und äußeren Enden verbunden ist, und wobei die genannte federnde Buchse (78) so ausgeführt ist, daß sie der nach rückwärts verlaufenden Bewegung der genannten Querarme (20, 22) federnd Widerstand entgegensetzt, wenn die genannten Arme sich in Rückwärtsrichtung um ihre entsprechenden inneren Enden drehen.

10. Eine unabhängige Hinterradaufhängung gemäß Anspruch 9, wobei die genannte Buchse (78) eine innere Hülse (80), die axial zu einem der genannten Arme verläuft, eine koaxiale äußere Hülse (82), ein elastomeres Material (84), das koaxial zwischen den genannten Hülsen angeordnet und damit verbunden ist, eine Widerlagervorrichtung (60) an einem der genannten Arme (20), um an der genannten inneren Hülse (80) anzuliegen, und eine Vorrichtung (66) für die Befestigung der inneren Hülse (80) am genannten einen Arm (20) umfaßt; wobei die genannte äußere Hülse (82) in eine Öffnung in dem anderen der genannten Arme (22) eingefügt ist, so daß eine nach rückwärts verlaufende Bewegung beider Arme bewirkt, daß die innere Hülse (80) sich in bezug auf die genannte äußere Hülse (82) translatorisch bewegt und das genannte elastomere Material (84) verschiebt, das eine Gegenkraft als Reaktion auf irgendeine Kraft, die die genannte, nach rückwärts verlaufende Bewegung verursacht, erzeugt.

**Revendications**

1. Suspension indépendante de roue arrière pour véhicule, comprenant un châssis, un organe de support de roue, un bras avant de commande (20) et un bras arrière de commande (22), chacun de ces bras de commande s'étendant transversalement par rapport à l'axe longitudinal du véhicule, tandis que chacun est relié de manière pivotante au châssis à son extrémité intérieure et à l'organe de support de roue à son extrémité extérieure, caractérisée par un appui de ressort de suspension (30) qui est réalisé venu de matière avec l'un (20) des bras avant et arrière de commande, cet appui (30) servant d'appui à un ressort de suspension (31) qui est interposé entre cet appui (30) et le châssis (10), tandis que les bras (20, 22) sont reliés mutuellement en une position située entre leurs extrémités intérieures et leurs extrémités extérieures à l'aide d'un moyen de liaison (78) qui est réalisé de façon à transférer d'un bras vers l'autre les efforts élastiques et à permettre un déplacement horizontal relatif de ces bras.

2. Suspension indépendante de roue arrière telle que revendiquée dans la revendication 1, comprenant en outre un amortisseur de chocs téléscopique s'étendant vers le haut (26) dont l'extrémité inférieure est fixée rigidement sur l'organe de support de roue (28), et un moyen qui relie de manière pivotante au châssis (10) l'extrémité supérieure (34) de cet amortisseur de chocs.

3. Suspension indépendante de roue arrière telle que revendiquée dans la revendication 1 ou 2, dans laquelle le moyen de liaison (78) comprend un moyen élastique (84) permettant de résister élastiquement à un déplacement horizontal relatif des bras.

4. Suspension indépendante de roue arrière telle que revendiquée dans la revendication 3, dans laquelle le moyen de liaison (78) comprend une douille en élastomère (84) qui résiste élastiquement à des déplacements horizontaux relatifs de l'appui de ressort de suspension et de l'autre bras.

5. Suspension indépendante de roue arrière telle que revendiquée dans l'une quelconque des revendications précédentes dans laquelle l'organe de support de roue (28) est agencé de façon à supporter la roue (12) dans une position qui est située dans le sens longitudinal entre les endroits où les extrémités extérieures des bras (20, 22) sont reliées à cet organe de support de roue (28).

6. Suspension indépendante de roue arrière telle que revendiquée dans l'une quelconque des revendications précédentes comprenant en outre un bras longitudinal (24) ayant l'une de ses extrémités (50) reliée au châssis (10) et son autre extrémité reliée à l'organe de support de roue (28).

7. Suspension indépendante de roue arrière telle que revendiquée dans l'une quelconque des revendications précédentes, dans laquelle l'appui de ressort de suspension (30) est réalisé venu de matière avec le bras avant de commande (20).

8. Suspension indépendante de roue arrière telle que revendiquée dans la revendication 7, dans laquelle ledit appui de ressort de suspension (30) est réalisé en creux vers le bas à l'intérieur du bras avant (20) de façon à former une poche, tandis que le ressort (31) est constitué par un ressort hélicoïdal qui est dimensionné de façon à s'emboîter dans cette poche.

9. Suspension indépendante de roue arrière pour véhicule, comprenant un châssis (10), un organe de support de roue (28), un bras avant de commande (20) et un bras arrière de commande (22), chacun de ces bras de commande (20, 22) s'étendant transversalement par rapport à l'axe longitudinal du véhicule, tandis que chacun est relié de manière pivotante au châssis (10) à son extrémité intérieure et à l'organe de support de roue à son extrémité extérieure, caractérisée par un appui de ressort de suspension (30) qui est réalisé venu de matière avec l'un (20) des bras avant et arrière de commande, cet appui (30) servant d'appui à un ressort de suspension (31) qui est interposé entre cet appui (30) et le châssis (10), l'un (20) des bras de commande étant relié à l'autre (22) bras par l'intermédiaire d'une douille élastique (28) située en un emplacement se trouvant entre leurs extrémités intérieures et leurs extrémités extérieures, cette douille élastique (78) étant agencée de façon à résister élastiquement à un déplacement en recul des bras transversaux (20, 22) lorsque ces bras pivotent suivant une direction vers l'arrière autour de leurs extrémités intérieures respectives.

10. Suspension indépendante de roue arrière telle que revendiquée dans la revendication 9, dans laquelle la douille (78) comprend un manchon intérieur (80) qui s'étend axialement en direction de l'un des bras, un manchon extérieur coaxial (82), une matière élastomère (84) qui est disposée de manière coaxiale entre ces manchons et leur est reliée, un moyen de butée (60) situé sur l'une des bras (20) pour venir en butée sur le manchon intérieur (80), et un moyen (66) permettant de fixer le manchon intérieur (80) sur le premier bras (20), tandis que le manchon extérieur (82) est emboîté dans une ouverture ménagée dans l'autre (22) bras de façon telle qu'un déplacement en recul des deux bras fait se déplacer le manchon intérieur (80) en translation par rapport à ce manchon extérieur (82) et déplace la matière élastomère (84) qui produit une force de contre-réaction en réponse à toute force provoquant ce mouvement de recul.

FIG.3

FIG.1

FIG.2

FIG. 4

FIG.5

FIG.6

0 083 234

FIG.7

FIG.8

3